# EUROPEAN PATENT SPECIFICATION

(11) **EP 3 421 978 B1**
(45) Date of publication and mention of the grant of the patent: **11.11.2020**
(21) Application number: 17756468.9
(22) Date of filing: 21.02.2017
(51) Int. Cl.: G01N 21/84, F21S 2/00, F21V 17/00, F21V 17/10, F21Y 103/10, F21Y 115/10, F21V 5/04, F21V 17/12

(54) **LINE LIGHT IRRADIATING DEVICE**
LINIENLICHTBESTRAHLUNGSVORRICHTUNG
DISPOSITIF D'IRRADIATION DE LUMIÈRE LINÉAIRE

(30) Priority: 23.02.2016 JP 2016031932
(43) Date of publication of application: 02.01.2019
(73) Proprietor: CCS Inc., Kyoto-City, Kyoto 602-8011 (JP)
(72) Inventor: INOUE, Yoshihiro, Kyoto-shi Kyoto 602-8011 (JP)
(74) Representative: Müller Hoffmann & Partner
(86) International application number: PCT/JP2017/006321
(87) International publication number: WO 2017/146030

(56) References cited:
- JP-A- 2007 225 591
- JP-A- 2009 288 206
- JP-A- 2010 114 054
- JP-A- 2014 122 799
- JP-A- 2015 125 003
- JP-A- 2016 014 599
- JP-A- 2016 201 360
- KR-B1- 101 223 958
- US-A1- 2005 281 023

## Description

### Technical Field

The present invention relates to a line light irradiating device which is adapted to irradiate an object (work) such as a product with line shaped light, for example, in a factory and suitably used for appearance inspection thereof.

### Background Art

As a line light irradiating device of this kind, there is a configuration of a plurality of LEDs provided along a longitudinal direction and a rod lens for condensing light emitted from the plurality of LEDs and emitting line shaped light, which are accommodated in a casing extending in the longitudinal direction, as disclosed in Patent Literatures 1 and 2.

Further, a rod lens made of resin such as plastic material is generally used, and this resin rod lens is manufactured by extrusion molding using, for example, metal mold.

However, in a resin rod lens, there sometimes occurs distortion in a longitudinal direction due to a nature of processing thereof. Due to this distortion in the longitudinal direction, there arises a problem that unevenness in illuminance or unevenness in illumination width of the line light irradiated from the line light irradiating device and that the line light may be sometimes curved.

Here, in Patent Literature 1, in order to dissolve deviation in fixed position due to a waved shape caused on a rod lens surface, there is adopted a configuration of inserting a flexible buffer member between the rod lens and the casing (in specific, a fixed projection). In this configuration, however, since the buffer member has flexibility, the distortion in the longitudinal direction of the rod lens cannot be corrected, and there may still occur unevenness in illuminance of the line light due to the distortion in the longitudinal direction.

Further, in Patent Literature 2, although a rod lens is fixed to a casing via a holding member, it is insufficient to dissolve the distortion in the longitudinal direction of the rod lens.

### Citation List

### Patent Literature

Patent Literature 1: JP 2010-112939A
Patent Literature 2: JP 2015-125003A

Further technological background can be found in JP 2016 014599 A.

### Summary of Invention

### Technical Problem

Therefore, the present invention has been made in order to solve the above problems, and its essential object is to fix a rod-shaped lens while correcting distortion of the rod-shaped lens.

### Solution to Problem

That is, a line light irradiating device according the present invention includes: a plurality of LEDs arranged in a predetermined direction; a resin rod-shaped lens provided along the arrangement direction of the plurality of LEDs and condensing light of the plurality of LEDs; a casing for accommodating the plurality of LEDs and the rod-shaped lens, the casing having a pair of longitudinal side wall portions provided in a manner of holding the rod-shaped lens therebetween; and a fixing member provided between one of the longitudinal side wall portions and the rod-shaped lens and pressed against a longitudinal side surface of the rod-shaped lens by being pressed in the direction of the other of the longitudinal side wall portions to thereby fix the rod-shaped lens, wherein the fixing member is elongate-shaped, having rigidity higher than that of the rod-shaped lens.

With such a line light irradiating device, since the rigidity of the fixing member is higher than that of the rod-shaped lens, the rod-shaped lens can be deformed by pressing the fixing member against the rod-shaped lens. Specifically, since the fixing member is elongate-shaped, it is advantageous to correct distortion of the rod-shaped lens in a longitudinal direction. Thus, the rod-shaped lens can be fixed while correcting the distortion of the rod-shaped lens.

In the present invention, the fixing members may be provided on both sides of the paired longitudinal side wall portions to thereby hold the rod-shaped lens therebetween by the fixing members on the both sides, however, in this configuration, not only the number of parts increases but also, since the fixing members are arranged on the both sides of the rod-shaped lens separately from the casing, positioning for fixing the rod-shaped lens with respect to the casing becomes difficult and this may be consequently difficult to accurately position the rod-shaped lens with respect to the plurality of LEDs fixed to the casing.

In order to appropriately solve this problem, it is preferable that, the other of the longitudinal side wall portions has a lens reference surface being in contact with the longitudinal side surface of the rod-shaped lens and serving as a positioning reference of the rod-shaped lens and the fixing member is provided between the one of the longitudinal side wall portions and the rod-shaped lens and is adapted to be pressed against the longitudinal side surface of the rod-shaped lens to thereby press the rod-shaped lens against the lens reference surface.

With this configuration, since the rod-shaped lens is held and fixed between the other of the longitudinal side wall portions and the fixing member, the positioning accuracy of the rod-shaped lens with respect to the other of the longitudinal side wall portions can be improved. Further, the number of parts can be reduced.

Here, it may be considered to have a configuration that the fixing member is pressed against the longitudinal side surface of the rod-shaped lens by pushing the fixing member from the outside into a space between the one longitudinal side wall portion and the rod-shaped lens. However, in this configuration, it is afraid that the rod-shaped lens may be damaged due to frictions at the time of pushing therein. Further, it is difficult to adjust a correction degree of distortion of the rod-shaped lens after pushing the fixing member therein.

In order to solve this problem, it is preferable that, the fixing member is adapted to be pressed against the longitudinal side surface of the rod-shaped lens by a pushing screw engaged in the one of the longitudinal side wall portions.

With this configuration, the fixing member can be pushed toward the rod-shaped lens side by the pushing screw after the fixing member is arranged between the one of the longitudinal side wall portions and the rod-shaped lens and it is possible to suppress the rod-shaped lens from being damaged. Further, it is possible to adjust the correction degree of the distortion of the rod-shaped lens by fastening and loosening the pushing screw.

In order to position the rod-shaped lens to a position apart from the LEDs by a predetermined distance by the lens reference surface, it is preferable that the lens reference surface has a first surface oriented to a light emitting side of the LEDs. With this configuration, the rod-shaped lens can be positioned with respect to the LEDs by making the rod-shaped lens abut to the first surface.

Further, merely by pressing the rod-shaped lens against the side of the other of the longitudinal side wall portions, i.e., merely by pressing the rod-shaped lens from a direction (lateral direction) orthogonal to the light emitting direction, it is afraid that the rod-shaped lens may be deviated to the light emitting side, however, in the case where the fixing member is configured to be pressed against a longitudinal side surface in the light emitting side of the LEDs rather than a center in cross section of the rod-shaped lens, this problem can be prevented from occurrence.

Further, in the case where the fixing member is adapted to have a flat plane shape and to be arranged in a clearance formed between the one of the longitudinal side wall portions and the rod-shaped lens, the configuration can be simplified.

It is preferable that, the plurality of LEDs are mounted on an elongate-shaped substrate, and the casing has a substrate reference surface in the side of the other of the longitudinal side wall portions, the substrate reference surface being in contact with a longitudinal side surface of the substrate and serving as a positioning reference of the substrate, and the substrate is fixed while being in contact with the substrate reference surface.

With this configuration, the rod-shaped lens and the LEDs can be positioned with reference to the side of the one of the longitudinal side wall portions, and the positioning of the rod-shaped lens and the LEDs can be easily performed.

In order to increase the rigidity of the casing, it is preferable that the casing is adapted to have a configuration that the paired longitudinal side wall portions are integrally formed with a bottom wall portion connecting between the paired longitudinal side wall portions.

With this configuration, the casing becomes hard to be deformed by a force received by the casing from the fixing member pressing the rod-shaped lens or by a force applied to the casing from the rod-shaped lens pressed by the fixing member, and the distortion of the rod-shaped lens can be surely corrected. Moreover, in the case where the casing and the fixing member are made of metal, the rigidity of a constant level or higher can be easily secured to be advantageous.

### Advantageous Effects of Invention

According to the present invention configured as described above, since the rod-shaped lens is pressed by the fixing member having rigidity higher than that of the rod-shaped lens, the rod-shaped lens can be fixed while correcting the distortion of the rod-shaped lens. Therefore, the line light irradiated from the line light irradiating device can be made straight with evenness in irradiation width without unevenness in illumination.

### Brief Description of Drawings

Fig. 1 is a schematic view showing an inspection system using a line light irradiating device of the present embodiment;
Fig. 2 is a perspective view showing the line light irradiating device of the same embodiment;
Fig. 3 is a cross sectional view showing the line light irradiating device of the same embodiment; and
Fig. 4 is a schematic view showing a state of pushing a fixing member by a pushing screw of the same embodiment.

### Reference Signs List

- 100 ...: Line light irradiating device
- 2 ...: LED
- 20 ...: Substrate (LED mounting substrate)
- 3 ...: Rod-shaped lens
- 3a ...: Longitudinal side surface
- 4 ...: Casing
- 41 ...: Left side wall portion (other longitudinal side wall portion)
- 41x ...: Lens reference surface
- 41x1 ...: First surface
- 41x2 ...: Second surface
- 42 ...: Right side wall portion (one longitudinal side wall portion)
- 42x ...: Supporting surface
- 43 ...: Bottom wall portion
- 5 ...: Fixing member
- 7 ...: Pushing screw

### Description of Embodiments

A first embodiment of a line light irradiating device according to the present invention is described below with reference to the drawings.

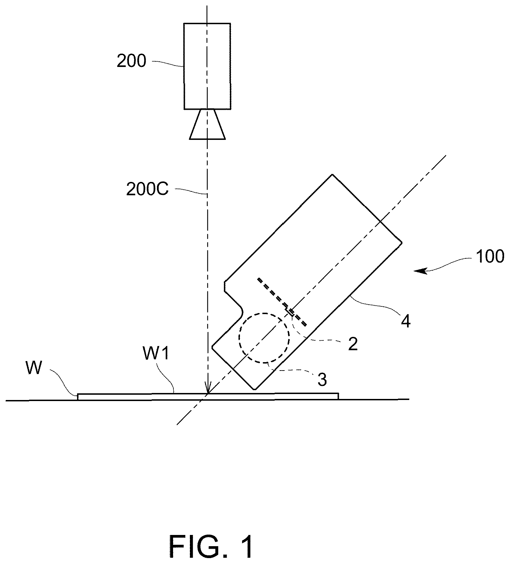

As shown in Fig. 1, the line light irradiating device 100 according to the present embodiment is adapted to irradiate , for example, an irradiation target surface W1 of an inspection object (work) W with line shaped light, in which a photograph of the irradiation target surface W1 is taken by an image pickup device 200 such as a line sensor, and the obtained image data is captured by an image processing device (not shown) and used in such as a product inspection system that performs an automatic inspection, for example, an inspection of presence or absence of defects such as scratches and dirt, foreign matters in liquid, or mark inspection. Note that, an irradiation width of the line shaped light is appropriately set according to an application and it may be wide or narrow so long as it is in accordance with the application.

The line light irradiating device 100 shown in Fig. 1 is arranged so as to irradiate the irradiation target surface W1 with the line shaped light from a direction inclined with respect to a direction orthogonal thereto (a vertical direction in the present embodiment), and an image pickup device 200 is arranged with its image pickup axis 200C being orthogonal to the irradiation target surface W1. Here, the work W is transported along a predetermined transport direction.

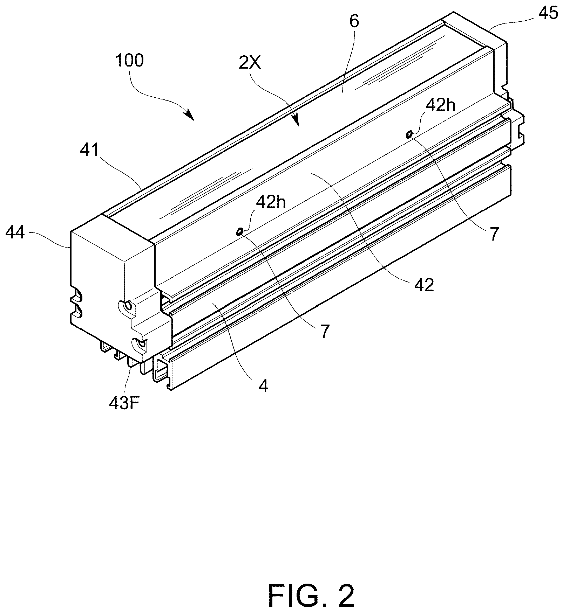

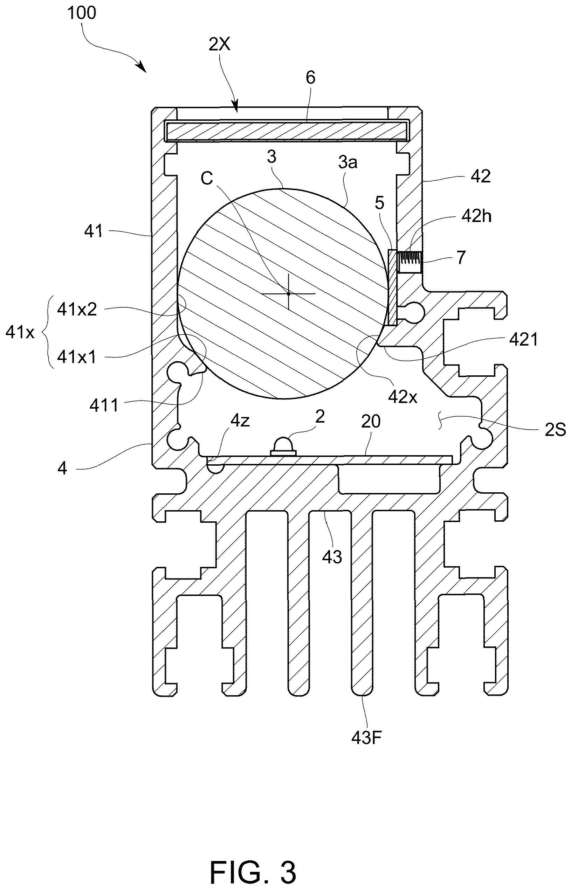

In specific, as shown in Figs. 2 and 3, the line light irradiating device 100 includes: a plurality of LEDs 2 arranged in a predetermined direction; a rod lens 3 for condensing light of the plurality of LEDs 2; and an elongate-shaped casing 4 for accommodating the plurality of LEDs 2 and the rod lens 3.

The plurality of LEDs 2 are mounted on a rectangular plate shaped LED mounting substrate 20, for example, at equal intervals in a row along the longitudinal direction thereof.

The rod lens 3 is provided along an arrangement direction of the plurality of LEDs 2 in a light emitting side of the plurality of LEDs 2. This rod lens 3 is adapted to have a circular shape in cross section and it is made of resin such as plastic (for example, acrylic).

The casing 4 is adapted to have an accommodating space 2S extending in the longitudinal direction for accommodating the LED mounting substrate 20 and the rod lens 3, having a light emitting portion 2X formed in a tip end surface for emitting the line shaped light.

In specific, the casing 4 includes a pair of longitudinal side wall portions 41 and 42 in parallel to each other extending in the longitudinal direction while holding the rod lens 3 therebetween and a bottom wall portion 43 extending in the longitudinal direction for connecting between the paired longitudinal side wall portions 41 and 42. There is formed a radiating fin 43F extending in the longitudinal direction on the bottom wall portion 43. Note that, in the following description, one longitudinal side wall portion of the paired longitudinal side wall portions 41 and 42 is referred to as a right side wall portion 42 and the other of the longitudinal side wall portions is referred to as a left side wall portion 41.

This casing 4 is made of metal (for example, made of aluminum), which is formed of the paired longitudinal side wall portions 41 and 42 and the bottom wall portion 43 integrally formed by such as extrusion molding.

Further, on both end portions in the longitudinal direction of the casing 4, there are fixed closure blocks 44 and 45 for closing the openings of the both ends in the longitudinal direction of an accommodating space 2S formed between the paired longitudinal side wall portions 41 and 42. In addition, in one 44 of the closure blocks, there is provided a power supply connector (not shown) for supplying electric power to the plurality of LEDs 2.

Moreover, under the light emitting portion 2X of the casing 4, there is provided a diffusion plate 6 for making an illumination distribution of the line light emitted from the rod lens 3 uniform. This diffusion plate 6 is provided in front of the light emitting side (i.e., above) of the rod lens 3, and a protection cover may be provided on the light emitting side surface (i.e., upper surface) of the diffusion plate 6.

Thus, as shown in Fig. 3, the line light irradiating device 100 of the present embodiment includes a fixing member 5 provided between the right side wall portion 42 and the rod lens 3 and pressed against a longitudinal side surface 3a of the rod lens 3 to thereby fix the rod lens 3. By this fixing member 5, the rod lens 3 is held between the left side wall portion 41 and the right side wall portion 42.

This fixing member 5 is adapted to have rigidity higher than that of the resin rod lens 3, and it is made of metal such as aluminum. In specific, the fixing member 5 includes a rectangular elongate-shaped plate material and it is adapted to have the same shape in cross section in the longitudinal direction. Further, a size in the longitudinal direction of the fixing member 5 is approximately equal to that of the rod lens 3, and the fixing member 5 is configured so as to be in contact with an overall length from one end to the other end in the longitudinal direction of the rod lens 3.

The following describes a fixing structure by the fixing member 5 with reference to Fig. 3.

On the left side wall portion 41, there is provided a lens reference surface 41x being in contact with a longitudinal side surface 3a of the rod lens 3 and serving as a positioning reference of the rod lens 3. This lens reference surface 41x is integrally provided with the left side wall portion 41 and it is formed along the longitudinal direction in its inner surface.

The lens reference surface 41x is adapted to be in contact with two positions apart from each other in a circumferential direction of the rod lens 3 in cross section orthogonal to the longitudinal direction, having a first surface 41x1 oriented to the light emitting side of the LEDs 2 and a second surface 41x2 formed in a light emitting side rather than the first surface 41x1 and just opposing to the right side wall portion 42. The first surface 41x1 is formed on a convex portion 411 protruded inward from an inner surface of the left side wall portion 41.

Further, on the right side wall portion 42, there is formed a supporting surface 42x for supporting the rod lens 3 together with the lens reference surface 41x. This supporting surface 42x is formed of a convex portion 421 which is oriented toward the light emitting side of the LEDs 2 and protruded inwardly from the inner surface of the right side wall portion 42.

There is formed a clearance for accommodating the fixing member 5 between the longitudinal side surface 3a of the rod lens 3 and the inner surface of the right side wall portion 42 in a state that the rod lens 3 is supported by the lens reference surface 41x and the supporting surface 42x. That is, the fixing member 5 is arranged in the clearance surrounded by the surface oriented to the light emitting side of the convex portion 421 (i.e., upper surface in Fig. 3), the longitudinal side surface 3a of the rod lens 3, and the inner surface of the right side wall portion 42.

Further, in the right side wall portion 42, there is formed a female screw hole 42h into which a pushing screw 7 is screwed, the pushing screw 7 being for pushing the fixing member 5 accommodated in the clearance toward the side of the rod lens 3 (i.e., the side of the left side wall portion 41). This female screw hole 42h is provided in each of two positions in the longitudinal direction of the right side wall portion 42.

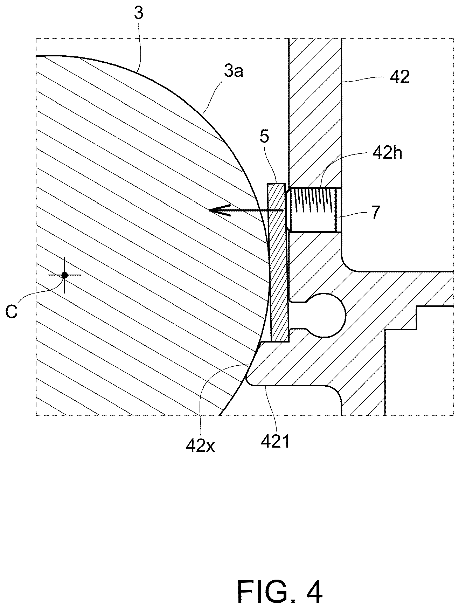

In this fixing structure, it is configured that the fixing member 5 is pushed by the pushing screw 7 in a state of being arranged in the clearance so as to be pressed against the longitudinal side surface 3a of the light emitting side of the LEDs 2 rather than the center C in cross section of the rod lens 3. In specific, the pushing screw 7 is provided at a position shifted toward the light emitting side rather than the center C in cross section of the rod lens 3. Thus, by fastening this pushing screw 7 and pushing the flat plate shaped fixing member 5, the fixing member 5 is pressed against the longitudinal side surface 3a of the rod lens 3 and it is tilted or deformed so as to overlay the longitudinal side surface 3a (see Fig. 4).

This results in that the rod lens 3 is pushed against the side of the left side wall portion 41 and the side of the LEDs 2 of the rod lens 3 (i.e., toward the opposite side of the light emitting side) and it is pressed against both of the first surface 41x1 and the second surface 41x2 of the lens reference surface 41x, and the rod lens 3 is positioned and fixed in the crosswise direction and vertical direction with respect to the left side wall portion 41.

At this time, the rod lens 3 is pressed against the second surface 41x2, and distortion mainly in the crosswise direction is thereby corrected. Further, the rod lens 3 is pressed against the first surface 41x1, and distortion mainly in the vertical direction is thereby corrected. Note that the rod lens 3 may be either separated from the supporting surface 42x or remains in contact with the same.

Further, inside of the casing 4, there is formed a substrate reference surface 4z in the side of the left side wall portion 41 which is in contact with a longitudinal side surface of an LED mounting substrate 20 and serves as a positioning reference of the LED mounting substrate 20. This substrate reference surface 4z may be formed along the longitudinal direction in the inner surface of the left side wall portion 41 or may be formed in the side of the left side wall portion 41 on an upper surface of the bottom wall portion 43. And the LED mounting substrate 20 is fixed to the bottom wall portion 43 in a state of being in contact with the substrate reference surface 4z. Thus, the LED mounting substrate 20 is positioned in the crosswise direction with respect to the left side wall portion 41.

### <Effect of the present embodiment>

According to the line light irradiating device 100 of the present embodiment configured as described above, since the rigidity of the fixing member 5 is higher than that of the rod lens 3, by pressing the fixing member 5 against the rod lens 3, the rod lens 3 can be deformed. In specific, the fixing member 5 is elongate-shaped and the distortion of the rod lens 3 can be corrected along the longitudinal direction. Thus, the rod lens 3 can be fixed while the distortion of the rod lens 3 is being corrected. In this configuration, since the casing 4 is an integrally formed product made of metal and the fixing member 5 is made of metal, the distortion of the rod lens 3 can be surely corrected.

Further, since the rod lens 3 is held and fixed between the left side wall portion 41 and the fixing member 5, the positioning accuracy of the rod lens 3 with respect to the left side wall portion 41 can be improved. Further, the number of parts can be reduced. In this configuration, since the LED mounting substrate 20 is also positioned with respect to the left side wall portion 41, the rod lens 3 and the LED mounting substrate 20 (LEDs 2) can be easily positioned with high accuracy.

Moreover, since the fixing member 5 arranged between the right side wall portion 42 and the rod lens 3 is pressed against the longitudinal side surface 3a of the rod lens 3 by the pushing screw 7, the rod lens 3 is not damaged at all. Further, by fastening and loosening the pushing screw 7, the degree of correcting the distortion of the rod lens 3 can be adjusted.

In addition, since the fixing member 5 is pressed against the longitudinal side surface 3a of the light emitting side of the LEDs 2 rather than the center C in cross section of the rod lens 3, the rod lens 3 can be prevented from deviating to the light emitting side.

Note that, the present invention should not be limited to the present embodiment.

For example, in the above embodiment, although the fixing member 5 is adapted to be fixed by the pushing screw 7, otherwise, the fixing member 5 may be adapted to be pressed against the rod lens 3 by another way of intermittently inserting a wedge member into a portion between the fixing member 5 and the right side wall portion 42.

Further, in the above embodiment, although one rod lens 3 is adapted to be pressed by one fixing member 5, it may be also possible that two or more fixing members are arranged along the longitudinal direction of the one rod lens 3 on the side of the right side wall portion 42 and the one rod lens 3 may be adapted to be pressed by the two or more fixing members. In addition, it may be also possible that the fixing members are provided on both sides of the pair of longitudinal side wall portions 41 and 42 to thereby be pressed against the rod lens 3.

Moreover, the shape of the fixing member 5 is not limited to the above embodiment, and any shape may be also possible so long as the fixing member is arranged between the rod lens 3 and the longitudinal side wall portions 41 and 42 so as to be able to be pressed against the longitudinal side surface 3a of the rod lens 3.

Furthermore, regarding the lens reference surface 41x provided in the left side wall portion 41, in addition to that integrally formed with the left side wall portion 41, it may be formed by fixing a lens reference surface forming member for forming the lens reference surface 41x to the inner surface of the left side wall portion 41.

In addition, the lens reference surface 41x is not limited to the above embodiment, and it may be also possible so long as it has a shape in cross section being in contact with two or more positions in the circumferential direction in the longitudinal side surface of the rod lens 3. For example, in the case of the rod lens 3 having a circular shape in cross section, the lens reference surface 41x may be possible so long as it has a circular shaped or V grove shaped portion in cross section.

Furthermore, in the above embodiment, although an example using the rod lens 3 as a rod-shaped lens is shown, a condensing lens such as a cylindrical lens of the other types may be used. Also, the line light irradiating device 100 may be adapted to an application of performing resin cure or exposure by applying ultraviolet light, besides for inspection.

### Industrial Applicability

According to the present invention, since the rod-shaped lens is pressed by the fixing member having rigidity higher than that of the rod-shaped lens, the rod-shaped lens can be fixed while correcting the distortion of the rod-shaped lens.

## Claims

1. A line light irradiating device (100) comprising:
a plurality of LEDs (2) arranged in a predetermined direction;
a resin rod-shaped lens (3) provided along the arrangement direction of the plurality of LEDs (2) and condensing light of the plurality of LEDs (2);
a casing (4) for accommodating the plurality of LEDs (2) and the rod-shaped lens (3), the casing (4) having a pair of longitudinal side wall portions (41, 42) provided in a manner of holding the rod-shaped lens (3) therebetween; and
a fixing member (5) provided between one of the longitudinal side wall portions (41, 42) and the rod-shaped lens (3), **characterized in that** the fixing member (5) is pressed against a longitudinal side surface of the rod-shaped lens (3) by being pressed in the direction of the other of the longitudinal side wall portions (41, 42) by a pushing screw (7) or a wedge member to thereby fix the rod-shaped lens (3),
wherein the fixing member (5) is elongate-shaped, having rigidity higher than that of the rod-shaped lens (3).

2. The line light irradiating device (100) according to claim 1, wherein the other of the longitudinal side wall portions (41, 42) has a lens reference surface (41x) being in contact with the longitudinal side surface of the rod-shaped lens (3) and serving as a positioning reference of the rod-shaped lens (3), and
wherein the fixing member (5) is provided between the one of the longitudinal side wall portions (41, 42) and the rod-shaped lens (3) and is adapted to be pressed against the longitudinal side surface of the rod-shaped lens (3) to thereby press the rod-shaped lens (3) against the lens reference surface (41x).

3. The line light irradiating device (100) according to claim 2, wherein the rod-shaped lens (3) has a circular shape in cross section orthogonal to a longitudinal direction,
wherein the lens reference surface (41x) has a first surface (41x1) oriented to a light emitting side of the LEDs (2), and
wherein the fixing member (5) is adapted to be pressed against a longitudinal side surface in the light emitting side of the LEDs (2) rather than a center in cross section of the rod-shaped lens (3).

4. The line light irradiating device (100) according to claim 2, wherein the fixing member (5) is adapted to have a flat plane shape and to be arranged in a clearance formed between the one of the longitudinal side wall portions (41, 42) and the rod-shaped lens (3).

5. The line light irradiating device (100) according to claim 1 or 2, wherein the pushing screw (7) is engaged in the one of the longitudinal side wall portions (41, 42).

6. The line light irradiating device (100) according to claim 2, wherein the plurality of LEDs (2) are mounted on an elongate-shaped substrate (20),
wherein the casing (4) has a substrate reference surface (4z) in the side of the other of the longitudinal side wall portions (41, 42), the substrate reference surface (4z) being in contact with a longitudinal side surface of the substrate (20) and serving as a positioning reference of the substrate (20), and
wherein the substrate (20) is fixed while being in contact with the substrate reference surface (4z).

7. The line light irradiating device (100) according to claim 1, wherein the casing (4) is adapted to have a configuration that the paired longitudinal side wall portions (41, 42) are integrally formed with a bottom wall portion (43) connecting between the paired longitudinal side wall portions (41, 42).

## Patentansprüche

1. Linienlichtbestrahlungsvorrichtung (100), aufweisend:
eine Vielzahl von LEDs (2), die in einer vorbestimmten Richtung angeordnet sind;
eine stabförmige Linse (3) aus Harz, die entlang der Anordnungsrichtung der Vielzahl von LEDs (2) vorgesehen ist und Licht der Vielzahl von LEDs (2) bündelt;
ein Gehäuse (4), um die Vielzahl von LEDs (2) und die stabförmige Linse (3) aufzunehmen, wobei das Gehäuse (4) ein Paar longitudinale Seitenwandteile (41, 42) aufweist, die so vorgesehen sind, dass sie die stabförmige Linse (3) dazwischen halten; und
ein Befestigungselement (5), das zwischen einem der longitudinalen Seitenwandteile (41, 42) und der stabförmigen Linse (3) vorgesehen ist, **dadurch gekennzeichnet, dass** das Befestigungselement (5) gegen eine longitudinale seitliche Oberfläche der stabförmigen Linse (3) gedrückt wird, indem es durch eine Druckschraube (7) oder ein Keilelement in die Richtung des anderen der longitudinalen Seitenwandteile (41, 42) gedrückt wird, um dadurch die stabförmige Linse (3) zu befestigen,
wobei das Befestigungselement (5) mit einer höheren Festigkeit als diejenige der stabförmigen Linse (3) länglich geformt ist.

2. Linienlichtbestrahlungsvorrichtung (100) nach Anspruch 1, wobei der andere der longitudinalen Seitenwandteile (41, 42) eine Bezugsfläche (41x) für eine Linse aufweist, die mit der longitudinalen seitlichen Oberfläche der stabförmigen Linse (3) in Kontakt ist und als Bezug zur Positionierung der stabförmigen Linse (3) dient und
wobei das Befestigungselement (5) zwischen dem einen der longitudinalen Seitenwandteile (41, 42) und der stabförmigen Linse (3) vorgesehen und dafür eingerichtet ist, gegen die longitudinale seitliche Oberfläche der stabförmigen Linse (3) gedrückt zu werden, um dadurch die stabförmige Linse (3) gegen die Bezugsfläche (41x) für eine Linse zu drücken.

3. Linienlichtbestrahlungsvorrichtung (100) nach Anspruch 2, wobei die stabförmige Linse (3) in einem zu einer longitudinalen Richtung orthogonalen Querschnitt eine Kreisform hat,
wobei die Bezugsfläche (41x) für eine Linse eine erste Oberfläche (41x1) aufweist, die zu einer lichtemittierenden Seite der LEDs (2) orientiert ist, und
wobei das Befestigungselement (5) dafür eingerichtet ist, gegen eine longitudinale seitliche Oberfläche in der lichtemittierenden Seite der LEDs (2) statt eine Mitte im Querschnitt der stabförmigen Linse (3) gedrückt zu werden.

4. Linienlichtbestrahlungsvorrichtung (100) nach Anspruch 2, wobei das Befestigungselement (5) so eingerichtet ist, dass es eine flache ebene Form hat und in einem zwischen dem einen der longitudinalen Seitenwandteile (41, 42) und der stabförmigen Linse (3) ausgebildeten Zwischenraum angeordnet ist.

5. Linienlichtbestrahlungsvorrichtung (100) nach Anspruch 1 oder 2, wobei die Druckschraube (7) in dem einen der longitudinalen Seitenwandteile (41, 42) in Eingriff gebracht ist.

6. Linienlichtbestrahlungsvorrichtung (100) nach Anspruch 2, wobei die Vielzahl von LEDs (2) auf einem länglich geformten Substrat (20) montiert ist,
wobei das Gehäuse (4) eine Bezugsfläche (4z) für ein Substrat in der Seite des anderen der longitudinalen Seitenwandteile (41, 42) aufweist, wobei die Bezugsfläche (4z) für ein Substrat mit einer longitudinalen seitlichen Oberfläche des Substrats (20) in Kontakt ist und als Bezug zur Positionierung des Substrats (20) dient und
wobei das Substrat (20) befestigt wird, während es mit der Bezugsfläche (4z) für ein Substrat in Kontakt ist.

7. Linienlichtbestrahlungsvorrichtung (100) nach Anspruch 1, wobei das Gehäuse (4) dafür eingerichtet ist, eine Konfiguration aufzuweisen, in der die gepaarten longitudinalen Seitenwandteile (41, 42) mit einem Bodenwandteil (43), der zwischen den gepaarten longitudinalen Seitenwandteilen (41, 42) verbindet, einteilig ausgebildet sind.

## Revendications

1. Dispositif irradiant à une lumière linéaire (100) comprenant :
une pluralité de LED (2) agencées dans une direction prédéterminée ;
une lentille en forme de tige en résine (3) disposée le long de la direction d'agencement de la pluralité de LED (2) et concentrant la lumière de la pluralité de LED (2) ;
un boîtier (4) pour loger la pluralité de LED (2) et la lentille en forme de tige (3), le boîtier (4) ayant une paire de parties de parois latérales longitudinales (41, 42) disposées de manière à tenir entre elles la lentille en forme de tige (3) ; et
un organe de fixation (5) disposé entre l'une des parties de parois latérales longitudinales (41, 42) et la lentille en forme de tige (3), **caractérisé en ce que** l'organe de fixation (5) est pressé contre une surface latérale longitudinale de la lentille en forme de tige (3) en étant pressé en direction de l'autre des parties de parois latérales longitudinales (41, 42) par une vis de poussée (7) ou un organe de calage pour fixer ainsi la lentille en forme de tige (3),
dans lequel l'organe de fixation (5) est de forme allongée, ayant une rigidité plus grande que la lentille en forme de tige (3).

2. Dispositif irradiant à une lumière linéaire (100) selon la revendication 1, dans lequel l'autre des parties de parois latérales longitudinales (41, 42) a une surface de référence de lentille (41x) qui est en contact avec la surface latérale longitudinale de la lentille en forme de tige (3) et qui sert de référence de positionnement de la lentille en forme de tige (3), et
dans lequel l'organe de fixation (5) est disposé entre l'une des parties de parois latérales longitudinales (41, 42) et la lentille en forme de tige (3) et est adapté pour être pressé contre la surface latérale longitudinale de la lentille en forme de tige (3) pour presser ainsi la lentille en forme de tige (3) contre la surface de référence de lentille (41x).

3. Dispositif irradiant à une lumière linéaire (100) selon la revendication 2, dans lequel la lentille en forme de tige (3) a une forme circulaire en section transversale orthogonale à une direction longitudinale,
dans lequel la surface de référence de lentille (41x) a une première surface (41x1) orientée vers un côté émetteur de lumière des LED (2), et
dans lequel l'organe de fixation (5) est adapté pour être pressé contre une surface latérale longitudinale dans le côté émetteur de lumière des LED (2) plutôt qu'un centre en section transversale de la lentille en forme de tige (3).

4. Dispositif irradiant à une lumière linéaire (100) selon la revendication 2, dans lequel l'organe de fixation (5) est adapté pour avoir une forme plane plate et pour être disposé dans un espace libre formé entre l'une des parties de parois latérales longitudinales (41, 42) et la lentille en forme de tige (3).

5. Dispositif irradiant à une lumière linéaire (100) selon la revendication 1 ou 2, dans lequel la vis de poussée (7) est engagée dans l'une des parties de parois latérales longitudinales (41, 42).

6. Dispositif irradiant à une lumière linéaire (100) selon la revendication 2, dans lequel la pluralité de LED (2) sont montées sur un substrat de forme allongée (20),
dans lequel le boîtier (4) a une surface de référence de substrat (4z) dans le côté de l'autre des parties de parois latérales longitudinales (41, 42), la surface de référence de substrat (4z) étant en contact avec une surface latérale longitudinale du substrat (20) et servant de référence de positionnement du substrat (20), et
dans lequel le substrat (20) est fixé en étant en contact avec la surface de référence de substrat (4z).

7. Dispositif irradiant à une lumière linéaire (100) selon la revendication 1, dans lequel le boîtier (4) est adapté pour avoir une configuration telle que les parties de parois latérales longitudinales (41, 42) appariées soient formées d'un seul tenant avec une partie de paroi inférieure (43) reliant les parties de parois latérales longitudinales (41, 42) appariées.
